# EUROPÄISCHE PATENTSCHRIFT

(11) **EP 2 252 908 B1**
(45) Veröffentlichungstag und Bekanntmachung des Hinweises auf die Patenterteilung: **19.10.2011**
(21) Anmeldenummer: 09716851.2
(22) Anmeldetag: 03.03.2009
(51) Int. Cl.: G02B 21/08, G02B 21/24

(54) **OBJEKTIVWECHSLER MIT AUFLICHTBELEUCHTUNG FÜR LICHTMIKROSKOPE**
OBJECTIVE CHANGER HAVING REFLECTED LIGHT ILLUMINATION FOR LIGHT MICROSCOPES
CHANGEUR D'OBJECTIF À ÉCLAIRAGE PAR LUMIÈRE INCIDENTE POUR MICROSCOPE OPTIQUE

(30) Priorität: 05.03.2008 DE 102008012585
(43) Veröffentlichungstag der Anmeldung: 24.11.2010
(73) Patentinhaber: Carl Zeiss MicroImaging GmbH, 07745 Jena (DE)
(72) Erfinder: HEIN, Detlef, 37083 Göttingen (DE); LAU, Berndt-Joachim, 07749 Jena (DE); LASCHKE, Axel, 37130 Gleichen (DE)
(74) Vertreter: Schiffer, Axel Martin
(86) Internationale Anmeldenummer: PCT/EP2009/001479
(87) Internationale Veröffentlichungsnummer: WO 2009/109353

(56) Entgegenhaltungen:
- EP-A- 0 504 940
- JP-A- 2 097 909
- US-B1- 6 259 557

## Beschreibung

Die vorliegende Erfindung bezieht sich auf einen Objektivwechsler mit Auflichtbeleuchtung für Lichtmikroskope nach dem Oberbegriff des Anspruchs 1.

Solche Objektivwechsler sind bekannt und weisen mindestens zwei Mikroskopobjektive zum Untersuchen einer Probe, einen beweglichen Träger, an welchem die Mikroskopobjektive montiert sind, und einen ortsfesten Träger auf, der zur Montage an einem Basiskörper des Mikroskops eingerichtet ist. Der bewegliche Träger ist dabei zum definierten Positionieren relativ zu dem ortsfesten Träger eingerichtet. Schließlich ist mindestens ein Beleuchtungsmittel zum Beleuchten der Probe vorhanden.

Objektwechsler werden insbesondere in der Stereomikroskopie eingesetzt, wo verschiedene Objektive mit unterschiedlichen Eigenschaften, beispielsweise mit unterschiedlichen Vergrößerungen, Arbeitsabständen, Aperturen und/oder Abbildungsqualitäten, benötigt werden. Für viele Anwendungen ist es von Vorteil, wenn ein schnelles Umschalten zwischen verschiedenen Objektiven möglich ist. Dies kann mit Objektivwechslern der oben beschriebenen Art grundsätzlich realisiert werden.

Weiterhin werden in der Stereomikroskopie zur Auflichtbeleuchtung unter anderem Ringlichter verwendet, die in der Regel direkt an den Mikroskopobjektiven befestigt werden. Diese Art der Beleuchtung ist für viele Anwendungen unverzichtbar, denn sie ermöglicht eine allseitige Auflichtbeleuchtung, die besonders einfach einzustellen und zu reproduzieren ist.

Zum Zuführen der notwendigen Energie besitzen handelsübliche faseroptische Ringlichter einen fest montierten Schlauch, der das Licht über dort integrierte Lichtleitfasern von einer externen Kaltlichtquelle zum Austrittsspalt des Ringlichts leitet. Bei ebenfalls erhältlichen Ringlichtern auf LED-Basis sind Kabel zur Versorgung der Leuchtdioden des Ringlichts mit elektrischer Energie vorhanden.

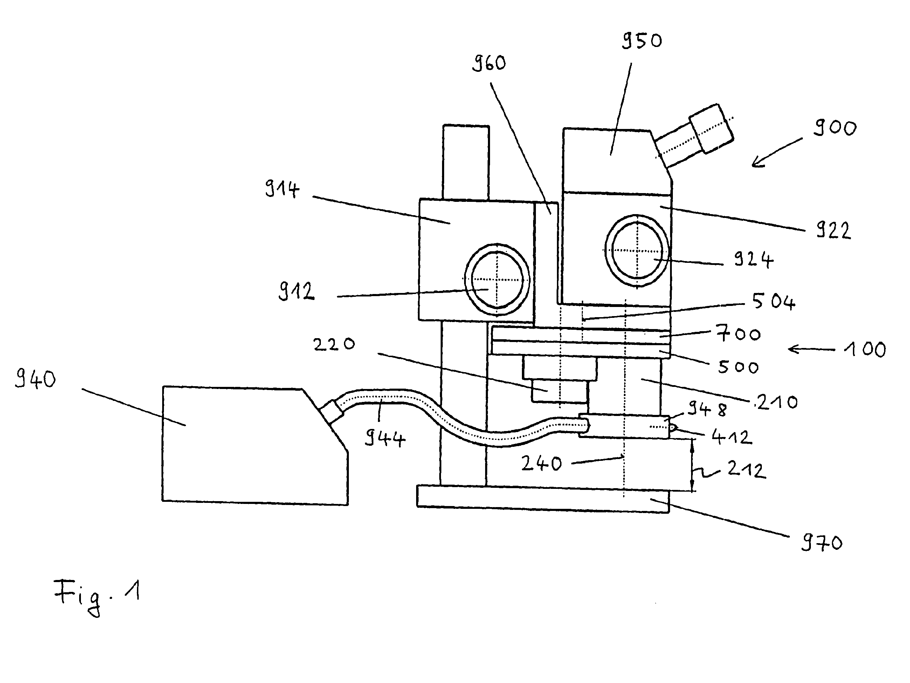

Bisher bekannte Objektivwechsler sind insoweit nachteilig, als der Abstand zwischen den Objektiven vergleichsweise klein ist, so dass eine Adaption von Ringlichtern an den Objektiven bei diesen Objektivwechslern nicht möglich ist. Dies wird mit Bezug auf die Figuren 1 bis 4 näher erläutert.

Figur 1 zeigt ein Mikroskop 900 mit einem daran angeordneten Objektivwechsler 100, der insgesamt drei Mikroskopobjektive 210, 220, 230 trägt. Zwar ließe sich bei der in Figur 1 dargestellten Situation der Abstand zwischen den Mikroskopobjektiven bei einem hinreichend stabilem Stativ auf das notwendige Maß konstruktiv vergrößern. Es besteht jedoch dann das Problem der Energiezufuhr zum Ringlicht auf dem jeweils aktiven Mikroskopobjektiv.

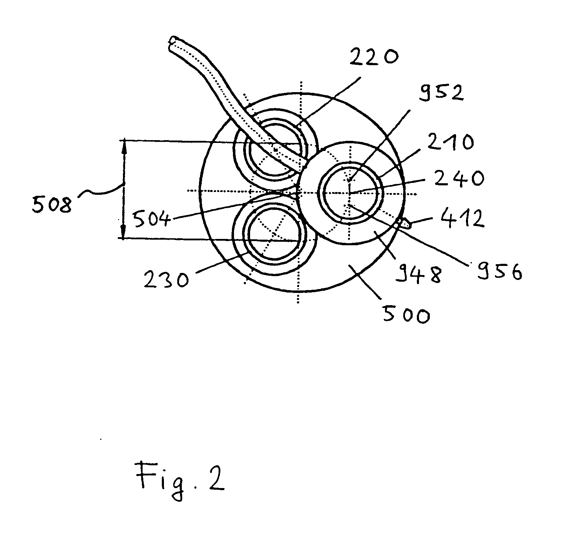

Figur 1 zeigt eine Seitenansicht des Mikroskops 900 mit dem Objektivwechsler 100 von links und in Figur 2 ist eine Unteransicht desselben Mikroskops 900, wobei es sich im konkreten Fall um ein Stereomikroskop handelt, dargestellt. Dabei sind in der Unteransicht aus Figur 2 nur die Bestandteile für die hier relevanten Objektivwechsel- und Ringlichtbeleuchtungsfunktionen dargestellt.

Auf einem Stativfuß 970 ist ein Fokussiertrieb 914 montiert, über den durch Drehen eines Fokussierknopfs 912 eine Höheneinstellung des an einem Träger 960 montierten Aufbaus vorgenommen werden kann. Auf dem Träger 960 ist ein Zoomkörper 922 angeordnet, über den durch Drehen eines Zoomknopfs 924 eine Variation der Vergrößerung bewerkstelligt werden kann.

Auf dem Zoomkörper 922 ist ein Tubus 950 mit zwei Okularen für die stereoskopische Beobachtung angebracht. Unter dem Träger 960 befindet sich ein Objektivwechsler 100 für drei Mikroskopobjektive 210, 220, 230. Ein Objektivwechsel folgt über eine Rotation eines Revolvertellers 500 um eine Drehachse 504 relativ zu einer feststehenden Revolverbasis 700. Dabei gibt es für jedes Objektiv 210, 220, 230 eine definierte Schaltstellung, in der das jeweilige Mikroskopobjektiv 210, 220, 230 als aktives Objektiv in der Stereo-Arbeitsposition benutzt werden kann.

Die Stereo-Arbeitsposition zeichnet sich dadurch aus, dass ein linker Abbildungskanal 952 und ein rechter Abbildungskanal 956 das jeweils aktive Objektiv symmetrisch durchsetzen. In der in den Figuren 1 und 2 dargestellten Anordnung befindet sich das Mikroskopobjektiv 210 in der Stereo-Arbeitsposition, das heißt das Mikroskopobjektiv 210 ist aktiv. Auf diesem aktiven Mikroskopobjektiv 210 befindet sich eine faseroptische Spaltringleuchte 948, die über eine Klemmschraube 412 auf dem Mikroskopobjektiv 210 fixiert werden kann und über eine externe Kaltlichtquelle 940 mit Licht versorgt wird.

Die in den Figuren 1 und 2 dargestellte Anordnung hat den Nachteil, dass sich mit einem Wechsel der Mikroskopobjektive auch die auf dem aktiven Mikroskopobjektiv 210 angeordnete Spaltringleuchte 948 und damit auch der Schlauch 944, in welchem sich ein Lichtleiter befindet und der demgemäß der Energiezufuhr dient, bewegt. Vorzugsweise sollten alle Mikroskopobjektive 210, 220, 230 mit entsprechenden Spaltringleuchten bestückt sein. Dies würde jedoch ohne weitere geeignete Maßnahmen aber zu einem Aufwickeln der Schläuche führen. Außerdem muss nach jedem Objektivwechsel die Energiezufuhr vom Ringlicht des vorher benutzten Objektivs zum Ringlicht des gerade aktivierten Objektivs gewechselt werden.

Üblicherweise müssten hierfür jedes Mal die Schläuche oder die Lichtleiter am Ausgang der Kaltlichtquelle 940 von Hand umgesteckt werden. Für Ringlichter, bei denen Leuchtdioden eingesetzt werden, gilt dies entsprechend. Die Verwendung von jeweils einer separaten Kaltlichtquelle 940 für jedes am Objektivrevolver angeordnete Mikroskopobjektiv 210, 220, 230 ist zwar im Grundsatz ebenfalls möglich. Allerdings ist diese Lösung teuer und zur Vermeidung von Streulicht müssten die jeweils nicht benutzten Kaltlichtquellen ohnehin ausgeschaltet werden.

Eine Alternative zu dem in den Figuren 1 und 2 dargestellten Aufbau ist in den Figuren 3 und 4 gezeigt. Demgemäß wird eine einzige Spaltringleuchte direkt unter dem jeweils aktiven Mikroskopobjektiv ortsfest angeordnet. Bei einer hinreichend niedrigen Anordnung der Spaltringleuchte 948 könnten sich dann unterhalb der Frontflächen aller vorhandenen oder adaptierten Objektive alle Mikroskopobjektive beim Objektivwechsel oberhalb der Spaltringleuchte 948 ungehindert bewegen.

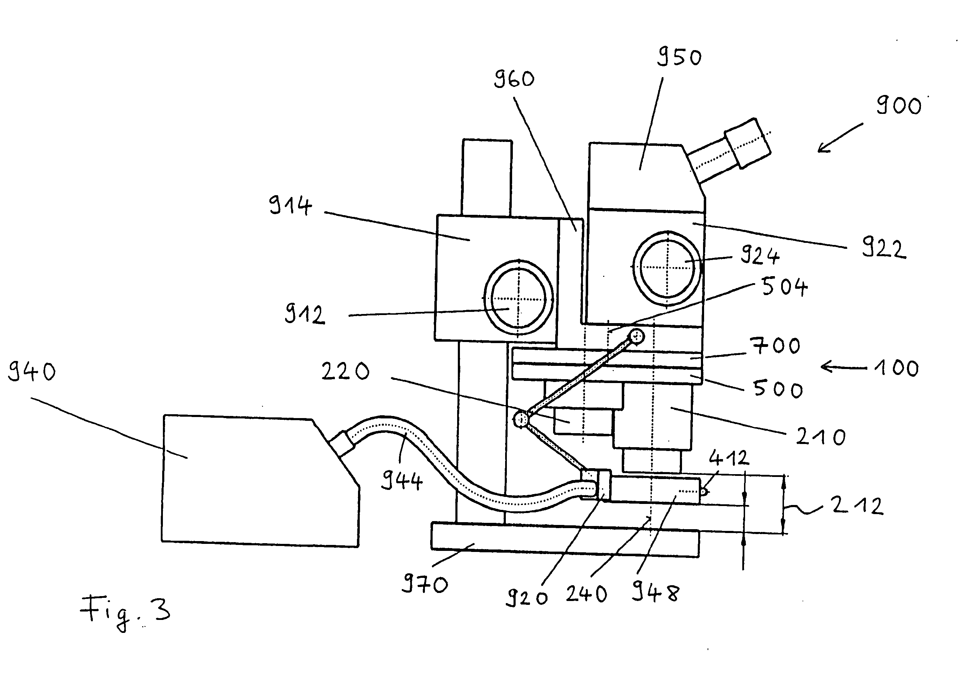

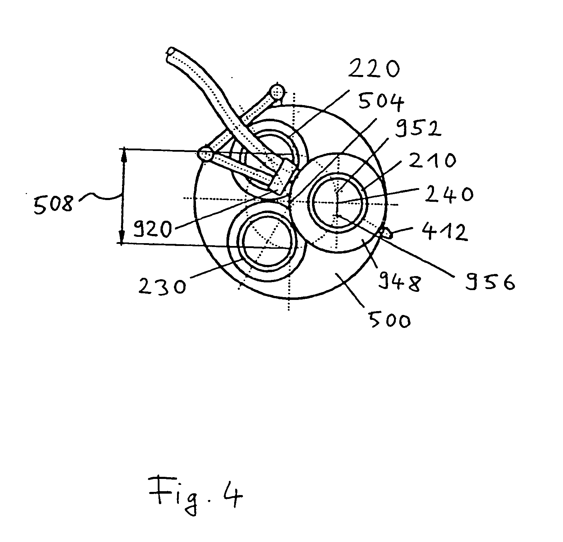

Figur 3 zeigt die Anordnung in einer Seitenansicht von links und in Figur 4 ist eine Unteransicht eines Stereomikroskops 900 gezeigt. In dieser Unteransicht sind wiederum nur die Komponenten dargestellt, die für die hier relevanten Objektivwechsel- und Ringlichtbeleuchtungsfunktionen relevant sind. Nachstehend werden nur die im Vergleich zu dem in den Figuren 1 und 2 gezeigten Ausführungsbeispiel unterschiedlichen Komponenten beschrieben.

Unter dem aktiven Mikroskopobjektiv 210 befindet sich in Figur 3 eine faseroptische Spaltringleuchte 948, die über eine einstellbare Halteeinrichtung 920 fixiert werden kann und über eine Kaltlichtquelle 940 mit Licht versorgt wird. Nach einem Objektivwechsel bleibt die. Spaltringleuchte 948 in derselben Position und befindet sich demgemäß nun unter einem anderen aktiven Mikroskopobjektiv. Die Spaltringleuchte 948 muss allerdings unterhalb der am tiefsten liegenden Frontfläche aller adaptierten Objektive positioniert werden, damit es beim Objektivwechsel nicht zu einer Kollision der Spaltringleuchte 948 mit diesem am tiefsten liegenden Objektiv kommt, In den Figuren 3 und 4 ist das am tiefsten liegende Objektiv das Mikroskopobjektiv 210.

Dies führt zu einer unerwünschten erheblichen Verkürzung der freien Arbeitsabstände der einzelnen Objektive. Dadurch ist auch bei Objektiven, bei denen normalerweise ein größerer freier Arbeitsabstand vorhanden ist, in den Figuren 3 und 4 beispielsweise die Mikroskopobjektlve 220 und 230, keine gute Zugänglichkeit zum Objekt mehr gegeben. Außerdem muss ein stabiler Haltemechanismus 920 vorhanden sein, der den konstruktiven Aufwand ebenfalls erhöht.

EP 0 504 940 A2 bezieht sich auf eine Auflichtbeleuchtung für ein Lichtmikroskop. Um mehr Licht für die Beleuchtung bereitstellen zu können, wird eine ringförmige Beleuchtung mit einer Übergabeschnittstelle eingesetzt.

In US-6,259,557 ist eine Vorrichtung zur Dunkelfeldbeleuchtung beschrieben. Eine bessere und homogenere Ausleuchtung soll dabei mit Hilfe eines "fly-eye-device" erreicht werden, welches eine Mehrzahl von in Ringform angeordneten Linsen beinhaltet.

Eine weitere Vorrichtung zur Dunkelfeldbeleuchtung ist in JP 02097909 beschreiben. Um einen möglichst kompakten Aufbau für eine ringförmige Beleuchtung zu erreichen, wird dort ein Aufbau vorgeschlagen, bei dem innerhalb einer Objektivhülse eine Mehrzahl von optischen Fasern ringförmig angeordnet ist. Über eine externe Faser kann den einzelnen Objektiven Licht zugeführt werden.

Als eine **Aufgabe** der Erfindung kann angesehen werden, einen Objektivwechsler anzugeben, bei dem ein Umschalten auf ein anderes Mikroskopobjektiv besonders einfach und unabhängig von vorhandenen Beleuchtungsmitteln erfolgen kann.

Diese Aufgabe wird durch den Objektivwechsler mit den Merkmalen des Anspruchs 1 gelöst.

Die Erfindung betrifft auch ein Mikroskop, welches mit einem erfindungsgemäßen Objektivwechsler ausgerüstet ist.

Bevorzugte Ausgestaltungen des erfindungsgemäßen Objektjvwechslers sind Gegenstand der abhängigen Ansprüche und werden darüber hinaus in der folgenden Beschreibung insbesondere im Zusammenhang mit den Figuren beschrieben.

Der Objektivwechsler der oben genannten Art ist erfindungsgemäß dadurch weitergebildet, dass an dem ortsfesten Träger mindestens eine Übergabeschnittstelle zum Übertragen von Energie zum Beleuchten der Probe vorhanden ist, dass mindestens ein mit dem beweglichen Träger starr verbundener Energieanschluss zum Aufnehmen von Energie zum Beleuchten der Probe vorhanden ist, dass der Energieanschluss mit einem Beleuchtungsmittel zum Beleuchten der Probe verbunden ist und dass durch Positionieren des beweglichen Trägers relativ zu dem ortsfesten Träger ein Leitungseingriff zwischen der Übergabeschnittstelle und einem Energieanschluss bereitstellbar ist.

Als ein erster Kerngedanke der Erfindung kann angesehen werden, auf die im Stand der Technik vorhandene durchgehende Verbindung von einer Energiequelle, beispielsweise einer Kaltlichtquelle, und einem Beleuchtungsmittel, wie beispielsweise einem Ringlicht, zu verzichten.

Als weitere wesentliche Idee der Erfindung kann erachtet werden, an dem ortsfesten Träger mindestens eine Übergabeschnittstelle zum Übertragen von Energie zum Beleuchten der Probe vorzusehen. Entsprechend ist erfindungsgemäß mindestens ein mit dem beweglichen Träger verbundener Energieanschluss zum Aufnehmen von Energie zum Beleuchten der Probe vorhanden. Dieser Energieanschluss ist erfindungsgemäß mit einem Beleuchtungsmittel verbunden.

Wesentlich für die Realisierung der Erfindung ist schließlich, dass der Energieanschluss oder gegebenenfalls mehrere Energieanschlüsse relativ zu dem beweglichen Träger so angeordnet ist bzw. sind und dass außerdem der bewegliche Träger zum Positionieren relativ zu der Obergabeschnittstelle so eingerichtet ist, dass durch geeignetes Positionieren des beweglichen Trägers ein Leitungseingriff zwischen der Übergabeschnittstelle und einem Energieanschluss bereitgestellt werden kann.

Mit dem erfindungsgemäßen Objektivwechsler wird eine Vorrichtung bereitgestellt, mit welcher den Mikroskopobjektiven unterschiedliche Beleuchtungsmittel mit besonders großer Anordnungs- und Gestaltungsfreiheit zugeordnet werden können. Mit dem erfindungsgemäßen Objektivwechsler können somit spezifische und hochvariable Beleuchtungssituationen verwirklicht werden.

Ein weiterer besonderer Vorteil kann darüber hinaus darin gesehen werden, dass diese Variabilität erzielt wird, ohne dass die Bewegungsfreiheit signifikant eingeschränkt ist. Die freien Arbeitsabstände zwischen einem Objekt und den Mikroskopobjektiven bleiben im Wesentlichen unverändert.

Ein Vorteil besteht in diesem Zusammenhang auch darin, dass hochspezifisch Beleuchtungsmodi sehr rasch hintereinander eingestellt werden können. Beispielswelse für Routineuntersuchungen wird dann ein deutlicher Zeitvorteil erreicht, der auch erhebliche Kostenersparnisse ermöglicht.

Der bewegliche Träger, an dem die Mikroskopobjektive montiert sind, ist gegenüber einem Basiskörper oder Träger des Mikroskops beweglich angeordnet. Demgegenüber wird der ortsfeste Träger an dem Basiskörper im Allgemeinen starr befestigt- Unter einem definierten Positionieren des beweglichen Trägers relativ zu dem ortsfesten Träger soll beispielsweise ein definiertes Verdrehen oder ein definiertes Verschieben verstanden werden. Besonders bevorzugt sind hierbei geeignete Rastpositionen oder Rastpunkte vorgesehen, so dass die Einstellung einer definierten Position erleichtert und begünstigt wird.

Als Basiskörper des Mikroskops kann grundsätzlich jedes Teil des Mikroskops angesehen werden, an dem der erfindungsgemäße Objektivwechsler zweckmäßig angebracht werden kann. Insbesondere kann es sich hierbei um einen Fokussiertrieb, einen daran angeordneten Träger oder auch ein feststehendes Teil eines Mikroskops handeln. Grundsätzlich kann der erfindungsgemäße Objektivwechsler aber auch integral mit einem Fokussiertrieb ausgebildet sein.

Als Übergabeschnittstelle Im Sinn der hier beschriebenen Erfindung sind alle Arten von Kontaktbereichen oder Kontaktstellen zu verstehen, an denen Energie übertragen werden kann. Wichtig in funktioneller Hinsicht ist dabei, dass ein Leitungseingriff zwischen dem Energieanschluss und der Übergabeschnittstelle hergestellt werden kann durch Bereitstellen einer geeigneten Relativpositionierung dieser Komponenten.

In entsprechender Weise soll unter dem Begriff Energieanschluss für die vorliegende Anmeldung eine Komponente verstanden werden, welche bei entsprechender Positionierung von der Übergabeschnittstelle Energie aufnehmen kann.

Erfindungsgemäß wird an der Übergabeschnittstelle Licht an einen Energieanschluss übertragen. Ergänzend kann an der Übergabeschnittstelle auch eine elektrische Kontaktierung und demgemäß die Übertragung von elektrischer Energie vorgesehen sein. Bei einer bevorzugten Ausgestaltung kann die erfindungsgemäße Übergabeschnittstelle an einem herkömmlichen Objektivwechsler nachgerüstet werden. Erfindungsgemäß ist jedem Mikroskopobjektiv mindestens ein separates Beleuchtungsmittel zugeordnet. Die oben beschriebenen erfindungsgemäßen Vorteile können dann bei jeder Objektiveinstellung erreicht werden.

Erfindungsgemäß ist jedem Mikroskopobjektiv mindestens ein separater Energieanschluss zugeordnet und durch Positionieren des beweglichen Trägers relativ zu dem ortsfesten Träger kann ein Leitungseingriff zwischen der Übergabeschnittstelle und dem Energieanschluss bereitgestellt werden, welcher dem jeweils aktiven Mikroskopobjektiv zugeordnet ist.

Erfindungsgemäß sind zwischen dem Energieanschluss und einem Beleuchtungsmittel Lichtleitmittel vorhanden, die auch als Adapter angesehen und bezeichnet werden können. Als Lichtleitmittel sind erfindungsgemäß Lichtleitstäbe und/oder innenverspiegelte Röhrchen vorhanden.

Bei bevorzugten Ausgestattungen sind ein Energieanschluss und/oder ein Lichtleitmittel und/oder ein Beleuchtungsmittel in einer integralen Komponente gebildet Dies kann beispielsweise für flexible Lichtleiter oder Schwanenhälse der Fall sein.

In diesem Zusammenhang besteht eine weitere zweckmäßige Ausgestaltung des erfindungsgemäßen Objektivwechslers darin, dass für mindestens ein Mikroskopobjektiv eine Haltevorrichtung zum Tragen von ein- oder mehrarmigen flexiblen Lichtleitern, von einem oder mehreren Beleuchtungsmitteln oder von Teilen eines Beleuchtungsmittels vorhanden ist. Grundsätzlich können diese Haltevorrichtungen auch an den jeweiligen Mikroskopobjektiven selbst befestigt sein. Besonders bevorzugt ist die Haltevorrichtung oder sind die Haltevorrichtungen aber an dem beweglichen Träger montiert.

Darüber hinaus können die Haltevorrichtungen nachrüstbar sein und sie können bevorzugt mindestens eine Schnittstelle zum Anbringen eines Beleuchtungsmittels aufweisen. Beispielsweise können hierfür bekannte Klemmen oder Rastvorrichtungen vorhanden sein.

Zum flexiblen Variieren und Einstellen eines Beleuchtungsmittels können die Haltevorrichtungen, beispielsweise mit Hilfe von Gelenkverbindungen, einstellbar oder verstellbar gebildet sein.

Ein besonders wichtiger Vorteil der Erfindung ist, dass im Hinblick auf die Beleuchtungsmittel eine besonders große Gestaltungs- und Wahlfreiheit besteht.

Zunächst können passive Beleuchtungsmittel eingesetzt werden, also solche Beleuchtungsmittel, die über die Übergabeschnittstelle mit Licht versorgt werden. Hierbei kann es sich insbesondere um faseroptische Auflichtbeleuchtungen handeln. Je nach Anwendungssituation können alternativ oder ergänzend auch aktive, also selbstleuchtende Beleuchtungsmittel verwendet werden. Hierzu kann an der Übergabeschnittstelle elektrische Energie übergeben werden, die erst in der aktiven Auflichtbeleuchtung in Licht umgewandelt wird. Weiterhin kann ein Beleuchtungsmittel eine Mehrzahl von Leuchtelementen, beispielsweise eine Mehrzahl von Lichtleitfasern und/oder eine Mehrzahl von Leuchtdioden, aufweisen.

Für bestimmte Anwendungen kann es darüber hinaus zweckmäßig sein, wenn eines oder mehrere der Beleuchtungsmittel mit einer Kombination aus verschiedenen Leuchtelementen bestückt ist.

Die erfindungsgemäßen Vorteile werden in besonderer Weise erreicht bei Ausführungsvarianten, bei denen als Beleuchtungsmittel mindestens ein an einem Mikroskopobjektiv montiertes Ringlicht vorhanden ist. Besonders bevorzugt ist an jedem Mikroskop ein separates Ringlicht montiert.

Dies ist jedoch nur eine von mehreren Möglichkeiten, die durch die erfindungsgemäße Übergabeschnittstelle am Objektivwechsler realisiert werden können. Prinzipiell lassen sich andere bekannte Beleuchtungselemente mit dem beweglichen Träger verstellbar anordnen, so dass mit diesen prinzipiell bekannten Beleuchtungselementen jede gewünschte Beleuchtungssituation in einer gewohnten Weise erzeugt werden kann.

Bei den vorstehend erwähnten ein- oder mehrarmigen Schwanenhälsen kann es sich um selbsttragende und flexibel einstellbare Varianten handeln, die mit faseroptischen Leuchtelementen und/oder mit Leuchtdioden bestückt sind. Auch die Verwendung von ein- oder mehrarmigen flexiblen Lichtleitern, die jeweils mit einem einstellbaren Haltearm fixiert werden und die ebenso mit faseroptischen Leuchtelementen oder Leuchtdioden ausgestattet sein können, ist möglich. Schließlich können auch diffuse Ringlichter oder Linienlichter verwendet werden. Sämtliche Komponenten können mit faseroptischen Leuchtelementen und/oder mit Leuchtdioden bestückt sein. Hinzu kommt der Einsatz von Polfiltern, Farbfiltern und/oder Diffusoren als Zubehör zu den obengenannten Komponenten, die jeweils für den gewünschten Einsatzzweck ausgewählt werden können. Anstelle eines ein- oder mehrarmigen flexiblen Lichtleiters können auch ein- oder mehrarmige Leuchtdioden-Spots mit einstellbarem Haltearm verwendet werden. Den genannten Bestandteilen können Fokussiervorsätze mit grundsätzlich bekannten mechanischen Komponenten vorgeschaltet werden.

Um eine homogene und schattenfreie Ausleuchtung einer Probe zu erzielen, werden die Leuchtelemente bevorzugt symmetrisch an einem Ringlicht angeordnet. Die Variabilität der Beleuchtungssituationen kann gesteigert werden, wenn die einzelnen Leuchtelemente eines Ringlichts separat ansteuerbar sind. Beispielsweise können, wie in EP 1 150154 A1 beschrieben, benachbarte Leuchtdioden zu Gruppen zusammengeschaltet werden.

Bei einer weiteren bevorzugten Variante sind die Leuchtelemente an den Ringlichtern jeweils in mehreren Reihen angeordnet. Hierbei kann durch die erhöhte Dichte der Leuchtelemente eine bessere Ausleuchtung erreicht werden.

Weiterhin können die Ringlichter als faseroptische Spaltringlichter oder auch als faseroptische Mehrpunkt-Ringlichter ausgeführt sein.

Im Hinblick auf die platzsparende Anordnung der Ringlichter an den Mikroskopobjektiven sind Ausgestaltungen des erfindungsgemäßen Objektivwechslers bevorzugt, bei denen die Ringlichter, insbesondere deren Gehäuse oder Fassungen, seitliche Abflachungen aufweisen und/oder exzentrisch in einer Fassung aufgenommen sind. Gestaltungsfreiheit besteht auch im Hinblick auf den beweglichen Träger. In funktionsmäßiger Hinsicht ist hierbei wichtig, dass der bewegliche Träger definiert relativ zum ortsfesten Träger positioniert werden kann. Beispielsweise kann der bewegliche Träger relativ zum ortsfesten Träger linear verschiebbar angeordnet sein. Ein Objektivwechsel erfolgt dann über eine Linearbewegung des beweglichen Trägers, beispielsweise eines Schlittens, auf dem die Mikroskopobjektive befestigt sind.

Bei besonders bevorzugten Varianten ist der bewegliche Träger relativ zum ortsfesten Träger drehbar angeordnet und ein Objektivwechsel erfolgt dann über eine Rotation des beweglichen Trägers, der dann auch als Revolverteller angesehen und bezeichnet werden kann, gegenüber dem ortsfesten Träger.

Bei einer einfach aufgebauten Ausführungsvariante des erfindungsgemäßen Objektivwechslers ist die Übergabeschnittstelle mit dem ortsfesten Träger starr verbunden. Beispielsweise kann es sich dann um einen Anschluss für einen faseroptischen Standardlichtleiter handeln, über den die Energieversorgung bis zu der Übergabeschnittstelle von einer externen Lichtquelle, etwa einer Kaltlichtquelle, bereitgestellt wird.

Grundsätzlich können an dem ortsfesten Träger auch mehrere Übergabeschnittstellen vorhanden sein. Beispielsweise wäre dies notwendig, wenn, wie oben beschrieben, die Beleuchtungsmittel für mehrere Mikroskopobjektive über ein- und denselben Energieanschluss versorgt werden.

Möglich ist aber auch, dass eine oder mehrere Übergabeschnittstellen beweglich an dem ortsfesten Träger angeordnet sind. Beispielsweise kann ein Anschluss für einen faseroptischen Standardlichtleiter verschiebbar oder verstellbar an dem ortsfesten Träger positioniert sein.

Ausführungsformen, bei denen mehrere Übergabeschnittstellen vorhanden sind oder bei denen die Übergabeschnittstellen gegenüber dem ortsfesten Träger beweglich sind, sind insbesondere bevorzugt für Anwendungen im Bereich der Stereomikroskopie, bei denen außerdem der bewegliche Träger für mindestens ein Mikroskopobjektiv eine Mehrzahl von Schaltstellungen aufweisen kann. Durch die beschriebenen Maßnahmen kann dann sichergestellt werden, dass in den verschiedenen Schaltstellungen für ein Mikroskopobjektiv die jeweils vorhandenen Beleuchtungsmittel aktiviert werden können. Grundsätzlich könnte dies auch dadurch verwirklicht werden, dass für ein bestimmtes Mikroskopobjektiv mehrere Energieanschlüsse vorgesehen sind, die für die unterschiedlichen Schaltstellungen jeweils mit ein- und derselben Übergabeschnittstelle in Leitungseingriff kommen.

Bevorzugt kann in diesem Zusammenhang außerdem die Übergabeschnittstelle zur Energieversorgung so bewegt werden, dass die Energieversorgung des aktiven Ringlichts in jeder Schaltstellung möglich ist.

Sofern die Übergabeschnittstelle beweglich am ortsfesten Träger angeordnet ist, muss diese beim Umschalten zwischen verschiedenen Schaltstellungen ein- und desselben Mikroskopobjektivs nachgeführt werden. Dies kann prinzipiell manuell erfolgen. Beispielsweise kann hierzu ein mechanisches Element, etwa ein Hebel, vorhanden sein. Bei komfortablere Varianten kann dieses mechanische Bedienelement auch so konstruiert sein, dass das notwendige Nachführen automatisch dadurch erfolgt, dass das mechanische Element mit dem beweglichen Träger geeignet zusammenwirkt. Hierbei befördert die Bewegung des beweglichen Trägers die Übergabeschnittstelle automatisch in die richtige Position.

Bei einer weiteren Variante kann zum Nachführen der Übergabeschnittstelle beim Umschalten zwischen verschiedenen Schaltstellungen ein- und desselben Mikroskopobjektivs ein separater Antrieb, beispielsweise ein Motor, vorhanden sein.

Bevorzugt ist die Einheit zur Nachführung der Übergabeschnittstelle nachrüstbar.

Das Verstellen des beweglichen Trägers, beispielsweise des Objektivrevolvers, relativ zum ortsfesten Träger kann grundsätzlich manuell erfolgen. Auch hier kann für die einfachere und automatisierte Bedienung ein Antrieb, etwa ein Motor, vorhanden sein. Ein besonderer Vorteil der Erfindung besteht nun darin, dass keinerlei Gefahr eines Aufwikkelns von Zuleitungen mehr besteht. Auch eine Fernsteuerung und eine weitestgehende Automatisierung ist möglich.

Unter dem Gesichtspunkt der Automatisierung der Bedienung ist es darüber hinaus zweckmäßig, wenn eine Einrichtung zum Bestimmen einer Relativposition des beweglichen Trägers relativ zum ortsfesten Träger vorhanden ist. Beispielsweise können hierzu eine Mehrzahl von Hall-Sensoren vorhanden sein, die am beweglichen oder ortsfesten Träger angeordnet sind. An der jeweils anderen Komponente sind dann entsprechende kleine Magnete befestigt, deren Ortsposition mit Hilfe der Hall-Sensoren nachgewiesen werden kann. Man spricht dann davon, dass die Ortsposition des beweglichen Trägers kodiert wird.

Bei einer weiter entwickelten Variante sind auch Ringlichter kodiert und die Informationen zum Beleuchtungszustand und zur aktuellen Objektivschaltstellung können gespeichert werden. Die Beleuchtungseinstellungen für jedes Ringlicht können dann in der entsprechenden Arbeitsposition abgespeichert werden und lassen sich bei Bedarf wieder reproduzieren. Vorzugsweise werden die Einstellungen, die bei der letzten Benutzung des Ringlichts aktiv waren, automatisch abgespeichert und beim nächsten Einschalten desselben Ringlichts automatisch wieder reproduziert.

Eine weitere Möglichkeit, die Beleuchtung zu beeinflussen, ergibt sich unmittelbar im Bereich der Übergabeschnittstelle, insbesondere wenn dort Licht übertragen wird. Bevorzugt kann hier eine Einrichtung zum Manipulieren der Beleuchtung, beispielsweise eine einschwenkbare Blende und/oder ein einschwenkbarer Filter, vorhanden sein.

Bei einer einfachen Ausführungsvariante sind an der Übergabeschnittstelle Schleifkontakte zum Übertragen von elektrischer Energie vorhanden.

Zusätzliche Freiheit für die Anordnung weiterer Beleuchtungskomponenten wird gewonnen, wenn an mindestens einem der Mikroskopobjektive eine weitere Übergabeschnittstelle zum Anschließen weiterer Beleuchtungsmittel vorhanden ist.

Da bei dem erfindungsgemäßen Objektivwechsler eine Beleuchtung der Probe nur möglich ist, wenn ein Energieanschluss am beweglichen Träger mit der Übergabeschnittstelle am ortsfesten Träger in einen Leitungseingriff kommt, also nur bei bestimmten Relativpositionen des beweglichen Trägers relativ zum ortsfesten Träger, kann es darüber hinaus zweckmäßig sein, die Energieversorgung für die Beleuchtungsmittel nur in diesen bestimmten Positionen zu aktivieren. Hierzu ist zweckmäßig ein Mittel zum Abschalten der Energieversorgung für die Beleuchtungsmittel vorhanden, welches mit der Einrichtung zum Feststellen der Relativposition des beweglichen Trägers zusammenwirken kann.

Im Hinblick auf die Automatisierung der Bedienung des Objektivwechslers kann eine Steuereinrichtung vorhanden sein, welche mindestens zum Ansteuern der Beleuchtungsmittel und des Antriebs des beweglichen Trägers eingerichtet ist. Darüber hinaus können aber auch die weiteren vorstehend beschriebenen Bestandteile, insbesondere ein Antrieb zum Verstellen der Übergabeschnittstelle, von dieser Steuereinrichtung, die insbesondere an ein elektronisches Netzwerk oder an einem CAN-Bus angeschlossen werden kann, angesteuert werden.

Die Untersuchung von Proben mit verschiedenen Mikroskopobjektiven wird erleichtert, wenn die den jeweiligen Mikroskopobjektiven zugeordneten Beleuchtungsmittel so ansteuerbar sind, dass bei einem Objektivwechsel eine Bildhelligkeit am Ort eines Empfängers, beispielsweise einer Kamera oder auch des menschlichen Auges, konstant bleibt. Die entsprechenden Steuerinformationen werden dann in einem Speicher der Steuereinrichtung abgelegt und, jeweils abhängig von der Relativposition des beweglichen Trägers relativ zum ortsfesten Träger, aufgerufen und an die jeweiligen Beleuchtungsmittel gegeben.

In diesem Zusammenhang kann außerdem bevorzugt sein, einen Zielwert für eine konstante Bildhelligkeit für verschiedene Empfänger vorzuwählen und die Ansteuerung der Beleuchtungsmittel im Übrigen so durchzuführen, dass eine Anpassung der Bildhelligkeit auf einen bestimmten Empfänger über eine kodierte Umschaltung zwischen verschiedenen Empfängern automatisch erfolgt. Die Erfindung betrifft neben dem vorstehend in zahlreichen Details beschriebenen Objektivwechsler auch ein gesamtes Mikroskop, welches mit einem erfindungsgemäßen Objektwechsler ausgerüstet ist.

Weitere Vorteile und Merkmale der Erfindung werden nachstehend mit Bezug auf die beigefügten Figuren erläutert.

Hierin zeigen:
- Fig. 1: eine Seitenansicht eines Mikroskops nach dem Stand der Technik;
- Fig. 2: eine Ansicht des Objektivrevolvers des Mikroskops aus Fig. 1 von unten;
- Fig. 3: eine Seitenansicht eines weiteren Mikroskops aus dem Stand der Technik;
- Fig. 4: eine Ansicht des Objektivrevolvers des Mikroskops aus Fig. 3 von unten;

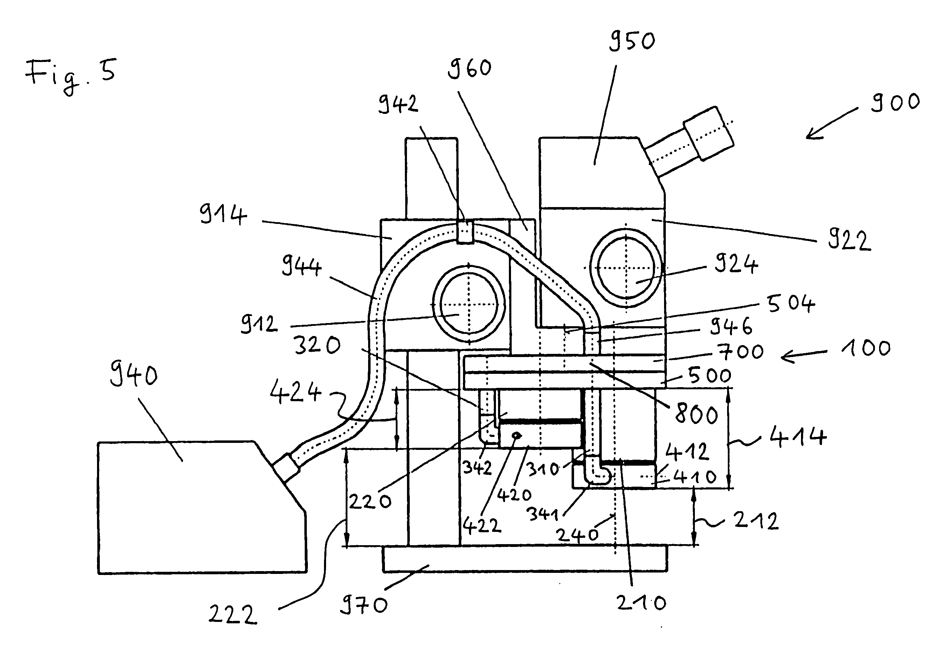

- Fig. 5: eine Seitenansicht eines erfindungsgemäßen Mikroskops mit einem erfindungsgemäßen Objektivwechsler;

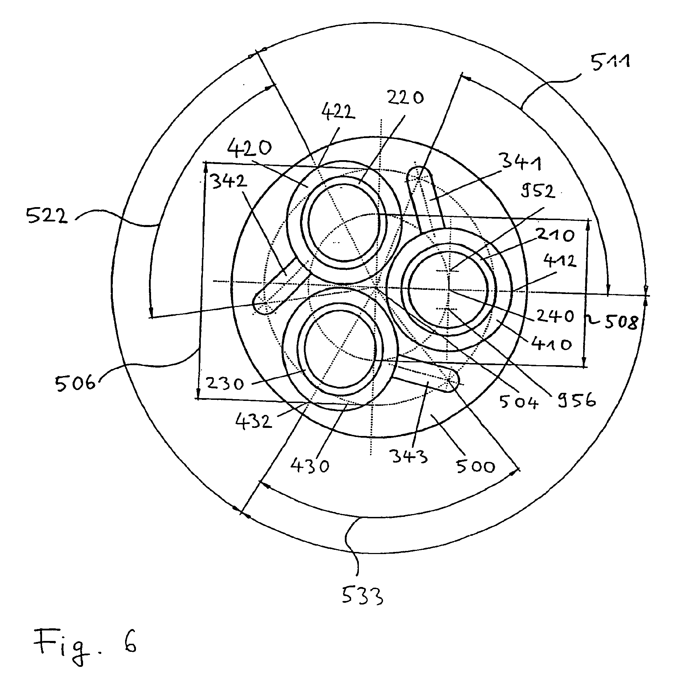

- Fig. 6: eine Ansicht des Objektivwechslers aus Fig. 5 von unten;

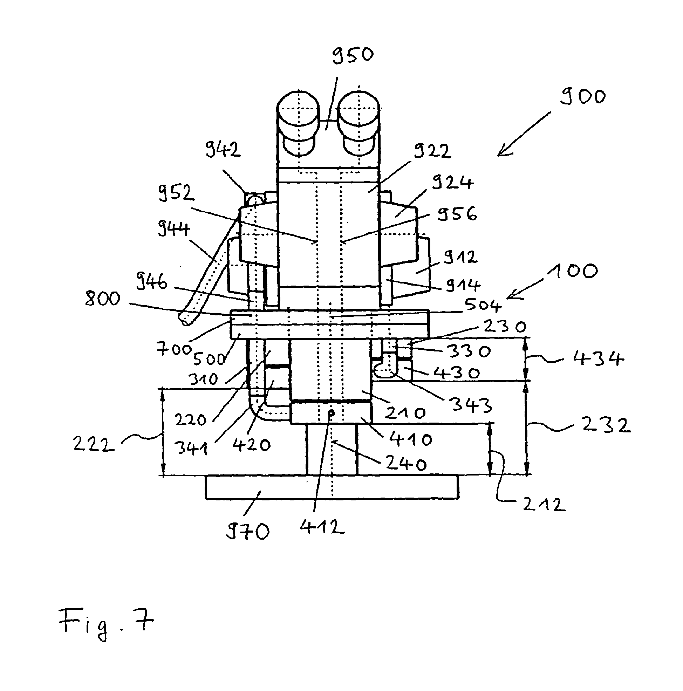

- Fig. 7: eine Frontansicht des Mikroskops aus Fig. 5;

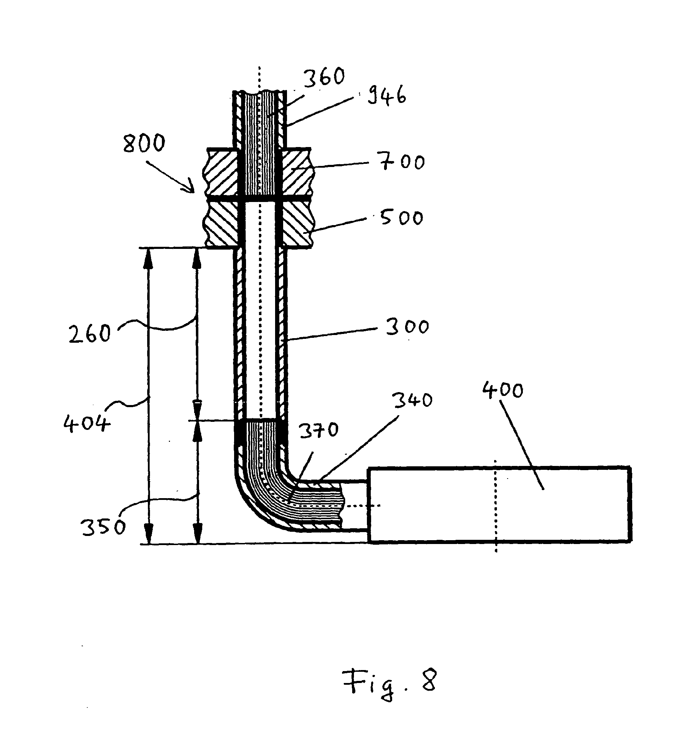

- Figuren 8 bis 10: Ausführungsbeispiele für Adapter bei dem erfindungsgemäßen Objektivwechsler;

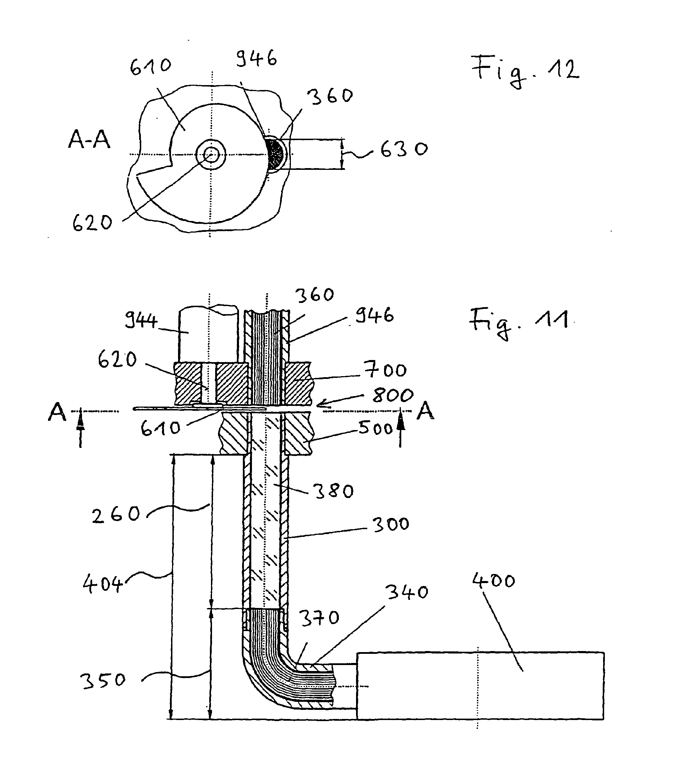

- Fig. 11: eine Teilschnittansicht im Bereich einer Übergabeschnittstelle eines erfindungsgemäßen Objektivwechslers mit einer einschwenkbaren Blende;
- Fig. 12: eine Teilschnittansicht entlang der Linie A-A in Fig. 11;

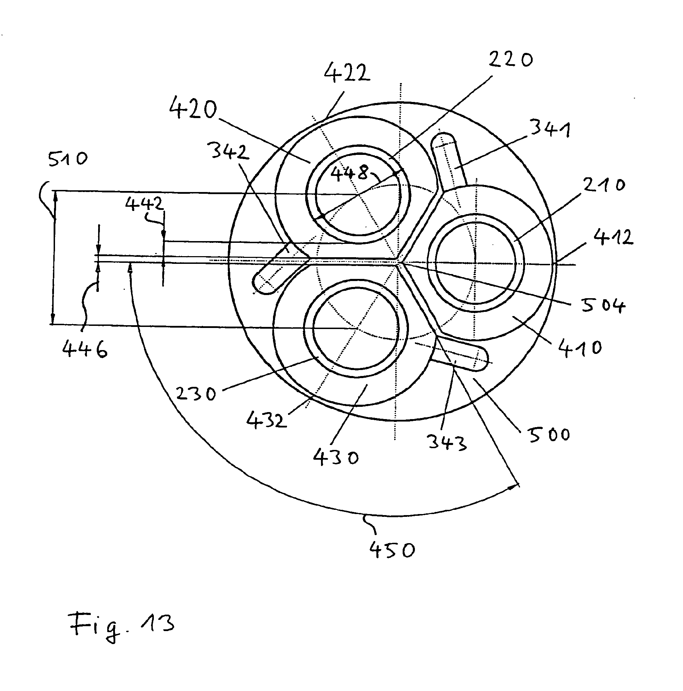

- Fig. 13: eine Ansicht eines weiteren Ausführungsbeispiels eines erfindungsgemäßen Objektivwechslers von unten;

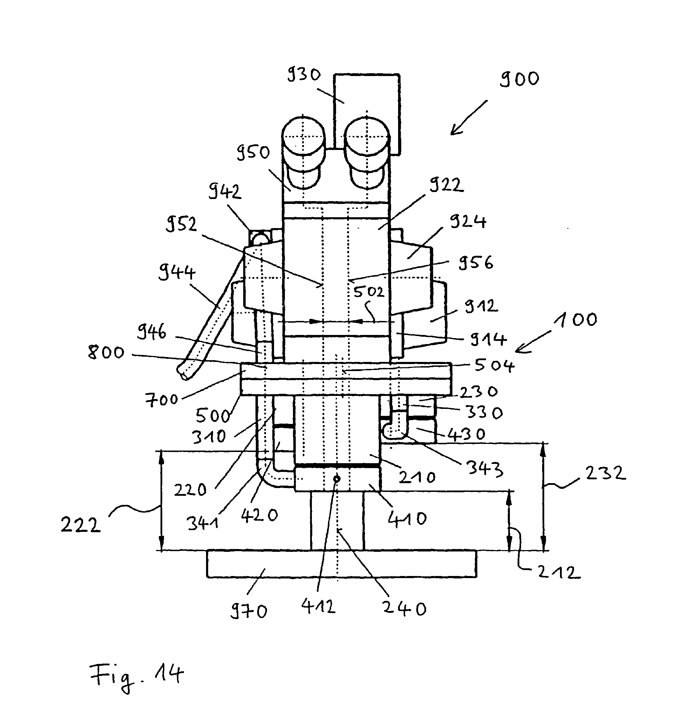

- Fig. 14: in einer Frontansicht ein erfindungsgemäßes Mikroskop mit einem erfindungsgemäßen Objektivwechsler in einer Stereo-Mikroskopstellung;

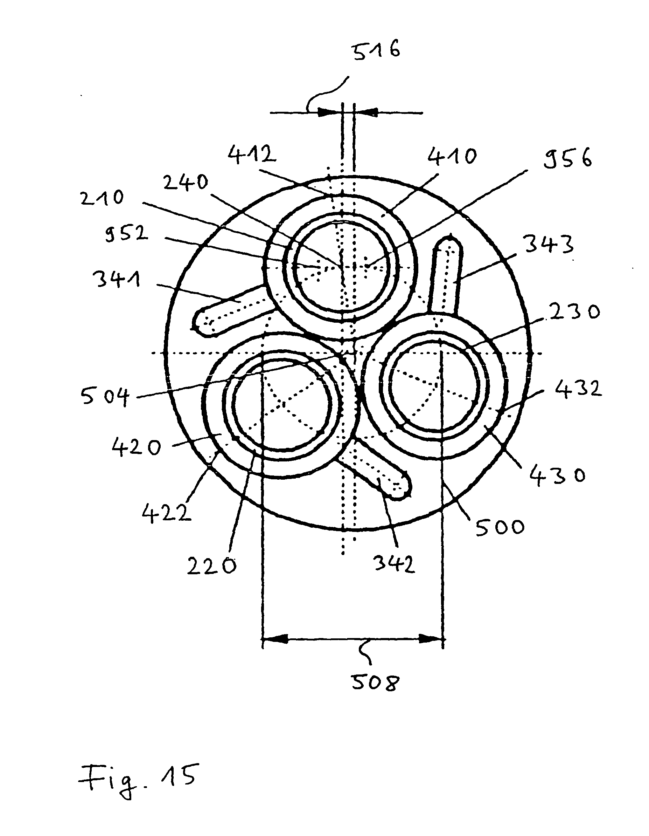

- Fig. 15: eine Ansicht des erfindungsgemäßen Objektivwechslers aus Fig. 14 von unten;

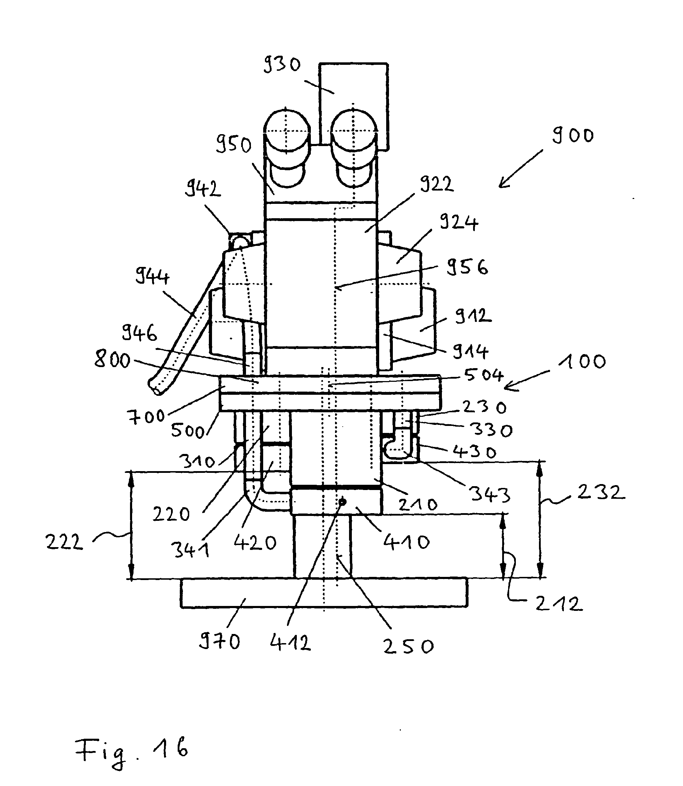

- Fig. 16: eine Ansicht eines erfindungsgemäßen Mikroskops mit einem erfindungsgemäßen Objektivwechslers von vorn mit dem Objektivwechsler in einer doc-Stellung;

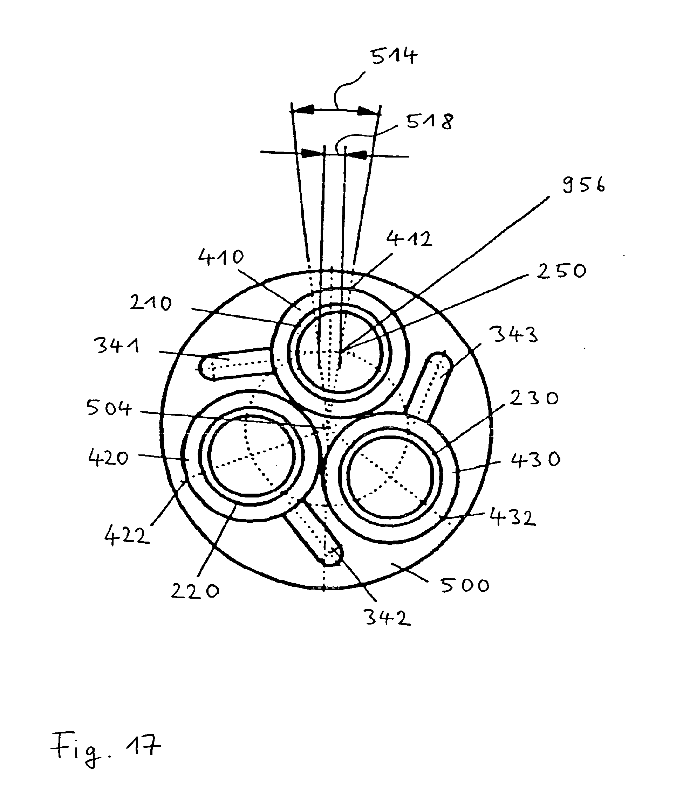

- Fig. 17: in einer Ansicht von unten den Objektivwechsler aus Fig. 16;

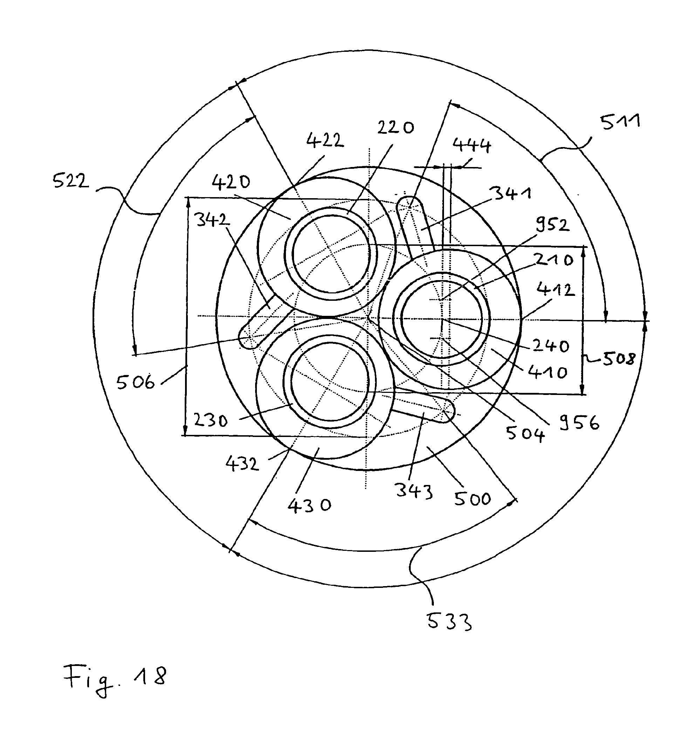

- Fig. 18: ein in einer Ansicht von unten ein weiteres Ausführungsbeispiel eines erfindungsgemäßen Objektivwechslers mit exzentrischen Ringlichtern.

Ein erstes Ausführungsbeispiel eines erfindungsgemäßen Objektivwechslers 100 mit einer faseroptischen Ringlichtbeleuchtung und einem erfindungsgemäßen Mikroskops 900 wird mit Bezug auf die Figuren 5 bis 7 erläutert.

Äquivalente Komponenten sind in allen Figuren mit denselben Bezugszeichen versehen.

Auf einem Stativfuß 970 ist ein Fokussiertrieb 914 montiert, über den durch Drehen des Fokussierknopfs 912 der am Träger 960 montierte Aufbau höhenmäßig verstellt werden kann. Auf dem Träger 960 ist ein Zoomkörper 922 angeordnet, über den durch Drehen eines Zoomknopfs 924 eine Variation der Vergrößerung bewerkstelligt werden kann. Auf dem Zoomkörper 922 ist ein Tubus 950 mit zwei Okularen zur stereoskopischen Beobachtung angebracht. Unter dem Träger 960, der als Mikroskopbasis angesehen und bezeichnet werden kann, befindet sich ein erfindungsgemäßer Objektivwechsler 100 mit drei Mikroskopobjektiven 210, 220, 230.

Ein Objektivwechsel erfolgt über eine Rotation eines beweglichen Trägers 500, wobei es sich im gezeigten Beispiel um einen Revolverteller handelt, um eine Drehachse 504 relativ zu einem ortsfesten Träger 700, der im gezeigten Beispiel auch als Revolverbasis bezeichnet werden kann. Dabei gibt es für jedes Mikroskopobjektiv 210, 220, 230 eine definierte Schaltstellung, in der das jeweilige Objektiv in der Stereo-Arbeitsposition benutzt werden kann.

Die Stereo-Arbeitsposition ist dadurch ausgezeichnet, dass ein linker Abbildungskanal 952 und ein rechter Abbildungskanal 956 das jeweilige Mikroskopobjektiv symmetrisch durchsetzen. In der dargestellten Anordnung befindet sich das Mikroskopobjektiv 210 in der Stereo-Arbeitsposition, das heißt das Mikroskopobjektiv 210 ist aktiv.

Auf den Mikroskopobjektiven 210, 220, 230 sind über Klemmschrauben 412, 422, 432 die Gehäuse von Ringlichtern 410, 420, 430 montiert. Die Abstände der Mikroskopobjektive 210, 220, 230 zu einer Unterkante des Revolvertellers 500 sind hier mit dem Bezugszeichen 414, 424, 434 versehen. Die Ringlichter 410, 420, 430 sind demgemäß platzsparend so angeordnet, dass die freien Abstände der Mikroskopobjektive, die in den Figuren mit den Bezugszeichen 212, 222, 232 versehen sind, nicht unnötig verkleinert werden. Gleichwohl ist eine vignettierungsfreie, also nicht beschnittene Ausleuchtung für jedes Mikroskopobjektiv 210, 220, 230 möglich.

Die Ringlichter 410, 420, 430 sind jeweils mit einem festmontierten Bogenansatz 341, 342, 343, die jeweils integrierte Lichtleitfasern aufweisen, versehen. Aus Kostengründen ist dabei das jeweilige Ringlichtgehäuse mit dem Bogenansatz für alle Objektive baugleich gefertigt. Die unterschiedlichen Abstände 414, 424, 434 zur Unterkante des Revolvertellers 500 werden im gezeigten Beispiel durch Adapterstücke 310, 320, 330 mit individuell angepassten Längen ausgeglichen.

Zwischen dem drehbaren Revolverteller 500 und der feststehenden Revolverbasis 700 ist erfindungsgemäß eine Übergabeschnittstelle 800 vorhanden. Mit Hilfe dieser Übergabeschnittstelle 800 wird Licht von einem ortsfesten Lichtleiter 944, der von einer Kaltlichtquelle 940 versorgt wird und durch einen Halter 942 am Fokussiertrieb 914 fixiert ist, in das Adapterstück 310 des in Fig. 5 aktiven Mikroskopobjektivs 210 übertragen. Die oberen Enden der Adapterstücke 310, 320, 330 können insoweit als Energieanschlüsse angesehen und bezeichnet werden.

Durch die efindungsgemäße Konstruktion wird sichergestellt, dass in einer Schaltstellung immer nur das jeweils aktive Mikroskopobjektiv mit Licht versorgt wird, da sich das jeweilige Adapterstück für alle Objektive 210, 220, 230 an derselben Relativposition befindet.

Die Bogenansätze 341, 342, 343 befinden sich unterhalb der Adapterstücke 310, 320, 330, die in der Ansicht von unten in Fig. 6 wegen ihres runden Querschnitts nicht zu sehen sind.

Die Achsen der Adapterstücke 310, 320, 330 befinden sich alle auf derselben Kreisbahn, deren Durchmesser in Fig. 6 mit dem Bezugszeichen 506 versehen ist. Mit dem Bezugszeichen 508 ist in den Figuren jeweils die Kreisbahn bezeichnet, auf welcher sich bei Rotation des Revolvertellers 500 die Achsen der Mikroskopobjektive 210, 220, 230 bewegen.

Zwischen der Mittenachse eines bestimmten Objektivs und der Mittenachse des jeweils zugeordneten Adapterstücks liegen bei dem in Fig. 6 gezeigten Beispiel jeweils Winkel 511, 522, 533. Da diese Winkel 511, 522, 533 gleich sind, befindet sich für jedes der Mikroskopobjektive 210, 220, 230 das jeweils zugeordnete Adapterstück 310, 320, 330 direkt unter dem versorgenden Lichtleiter 944 oder, genauer gesagt, unter einer Endhülse 946 des Lichtleiters 944, wenn der Revolverteller 500 für das entsprechende Mikroskopobjektiv in die geeignete Drehposition gebracht wird. Als versorgender Lichtleiter 944 wird vorzugsweise ein faseroptischer Standardlichtleiter eingesetzt.

In den Figuren 8, 9 und 10 sind verschiedene Lösungen für das Übertragen der Lichtenergie von der Übergabeschnittstelle 800 zwischen der feststehenden Revolverbasis 700 und dem drehbaren Revolverteller 500 in eine faseroptische Spaltringleuchte mit einem Ringlichtgehäuse 400 dargestellt. Dabei können die vom konkreten Mikroskopobjektiv abhängigen Höhen 404 durch unterschiedliche Maßnahmen ausgeglichen werden.

Fig. 8 zeigt eine Schnittdarstellung der in den Figuren 5 bis 7 beschriebenen Lösung, wobei ein Adapterstück 300 zur Lichtübertragung durch eine innenverspiegelte Röhre realisiert wird. In der Endhülse 946 des versorgenden Lichtleiters 944 befindet sich ein Bündel 360 von Lichtleitfasern, wobei die Stirnflächen der Endhülse 946 und der dort integrierten Lichtleitfasern in einer Ebene liegen. Bei Standard-Lichtleitern sollte dies immer der Fall sein. Die Endhülse 946 des versorgenden Lichtleiters ist dabei so in der Revolverbasis 700 angeordnet, dass die Stirnflächen der Endhülse 946 mit dem integrierten Lichtleittfasern 360 vorzugsweise nicht unterhalb der Revolverbasis 700 herausragen.

Das Ringlichtgehäuse 400 weist einen vorzugsweise festen Bogenansatz 340 mit integrierten Lichtleitfasern 370 auf, die im weiteren Verlauf so wie bei herkömmlichen faseroptischen Spaltringleuchten im Ringlichtgehäuse 400 verlegt sind.

Dabei ergibt sich ein kreisringförmiger Spalt, der mit Lichtleitfasern 370 ausgefüllt ist, wobei die Lichtleitfasern 370 gegenüber einer Mittenachse des Ringlichtgehäuses 400 mehr oder weniger stark nach innen geneigt sein können. Die eingestellte Neigung hängt von einer gewünschten Beleuchtungscharakteristik ab. Für eine Dunkelfeldbeleuchtung müssen die Lichtleitfasern 370 demgemäß stärker geneigt werden, damit das von einem ebenen Objekt reflektierte Licht nicht direkt in das Mikroskopobjektiv eintreten kann. In verschiedenen Ringlichtgehäusen 400 können unterschiedliche Beleuchtungscharakteristiken erzeugt werden.

Die im Bogenansatz 340 integrierten und im Wesentlichen parallel angeordneten Lichtleitfasern 370 bilden mit ihren einzelnen Stirnflächen eine gemeinsame Eingangsstirnfläche, die sich im Abstand 350 von einem Spaltaustritt aus an einer Unterseite des Ringlichtgehäuses 400 befindet. Das Adapterstück 300 wird auf dem vorzugsweise festen Bogenansatz fixiert und von unten bis zum Anschlag in dem drehbaren Revolverteller 500 geschoben. Dabei ragt das obere Ende des Adapterstücks nicht über eine Oberseite des drehbaren Revolvertellers 500 heraus. Das Ringlichtgehäuse 400 wird dabei auf das entsprechende Objektiv geschoben. Durch eine geeignete Wahl des Abstands 260 von der Oberkante des Bogenansatzes zur Unterkante des Revolvertellers 500 als konstruktives Maß am Adapterstück ergibt sich dann automatisch der benötigte Abstand 404 von der Unterkante des Ringlichtgehäuses 400 zur Unterkante des Revolvertellers 500 für die erforderliche Arbeitsposition des Ringlichtgehäuses 400. Der Spalt zwischen der Stirnfläche der Endhülse 946 und den Adapterstücken 300 wird, um Lichtverluste möglichst zu vermeiden, so klein wie konstruktiv möglich ausgeführt.

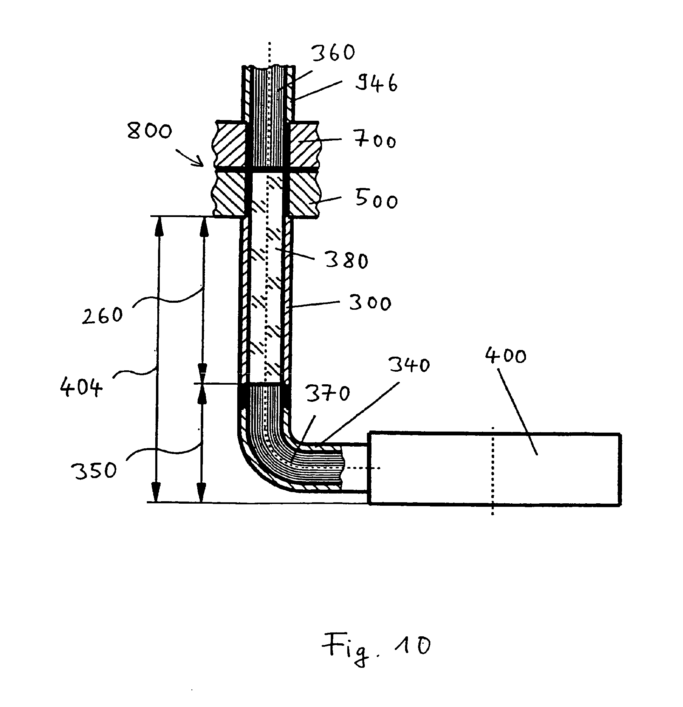

Gemäß Fig. 10 kann das Adapterstück 300 zur Lichtübertragung auch einen Lichtleitstab 380 enthalten. Hierbei ergibt sich eine gleichmäßigere Lichtdurchmischung. Die Stirnflächen des Lichtleitstabs 380 werden zur Vermeidung von unnötigen Lichtverlusten so nah wie möglich an den Stirnflächen der benachbarten Lichtleitfaserbündel 360, 370 positioniert.

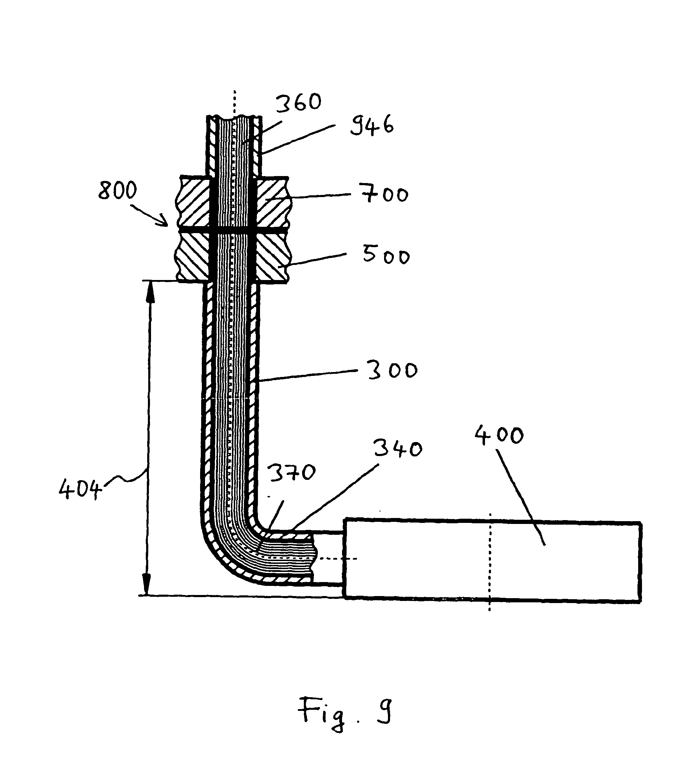

Fig. 9 zeigt als weitere Variante die Vereinigung des Adapterstücks 300 mit dem Ringlichtgehäuse 400. Diese Variante ist vorteilhaft, wenn keine unterschiedlich hohen Adapterstücke 300 erforderlich sind. Grundsätzlich lassen sich auch Faserstäbe als Adapterstücke 300 zur Lichtübertragung einsetzen. Zu berücksichtigen ist dabei, dass durch den möglichen Versatz der Einzelfasern an zwei optischen Schnittstellen Lichtverluste auftreten können.

Bei der in Fig. 11 gezeigten Variante, die auf Fig. 10 basiert, befindet sich in der Übergabeschnittstelle 800 zwischen der Stirnfläche der Endhülse 946 und den Stirnflächen der Adapterstücke 300 oder der Lichtleitstäbe 380 eine Einrichtung zur Manipulation der Beleuchtung. Diese Beleuchtungseinstellungen wirken immer auf das jeweils aktive Ringlicht. Wie in dem in den Figuren 11 und 12 gezeigten Beispiel besteht die Einrichtung zur Manipulation der Beleuchtung aus einer um eine Drehachse 620 drehbaren Blende 610 mit einer vorzugsweise spiralförmig verlaufenden Blendenkante. Durch eine Drehung der Blende 610 kann sodann eine beliebige Abschattung des aktiven Querschnitts, der einen Durchmesser 630 aufweist, eingestellt werden. In Verbindung mit dem nachgeschalteten gut durchmischenden Lichtleitstab 380 kann so eine kostengünstige Lichtdämmung des aktiven Ringlichts mit einer homogenen Ausleuchtung realisiert werden.

Die Einrichtung zur Manipulation der Beleuchtung kann grundsätzlich auch vor der Übergabeschnittstelle 800, beispielsweise also vor dem versorgenden Lichtleiter 944 angeordnet sein. Auch in diesem Fall wirken die Beleuchtungseinstellungen immer auf das jeweils aktive Ringlicht.

Fig. 13 zeigt eine Unteransicht eines Stereomikroskops, wobei nur die Komponenten für die hier relevanten Objektivwechsel- und Ringlichtbeleuchtungsfunktionen dargestellt sind. Die Gehäuse der Ringlichter 410, 420, 430 sind in den Bereichen zwischen den Objektiven abgeflacht, um eine platzsparende Anordnung am Revolverteller 500 zu ermöglichen. Die verbleibende Ringbreite 442 im abgeflachten Bereich ist dabei kleiner als der um den halben Aufnahmedurchmesser 448 reduzierte halbe Mittenabstand 510 der Mikroskopobjektive. Vorzugsweise sind, wie im gezeigten Beispiel, zwei Abflachungen an dem Ringlichtgehäuse vorhanden und der Teilungswinkel 450 zwischen den Ringabflachungen entspricht vorzugsweise 360° geteilt durch die Anzahl der Objektivaufnahmen am Objektivwechsler. Demgemäß ergibt sich ein gleichmäßiger Abstand 446 zwischen den Abflachungen benachbarter Ringlichter.

In den Figuren 14 bis 17 ist eine besondere Variante des erfindungsgemäßen Objektivwechslers 100 und des erfindungsgemäßen Mikroskops 900 gezeigt.

Wie in den vorstehend beschriebenen Ausführungsbeispielen befindet sich unter dem Träger 960 ein erfindungsgemäßer Objektivwechsler 100 für drei Mikroskopobjektive 210, 220, 230. Ein Objektivwechsel erfolgt, ebenso wie bei den vorstehend beschriebenen Beispielen, über eine Rotation des Revolvertellers 500 und eine Drehachse 504 relativ zu einer feststehenden Revolverbasis 700.

Im Gegensatz zu dem in den Figuren 5 bis 7 gezeigten Ausführungsbeispiel bestehen hier aber für jedes der drei Mikroskopobjektive zwei definierte Schaltstellungen, das heißt jedes Objektiv kann sowohl in der Stereo-Arbeitsposition als auch in der doc-Stellung benutzt werden. Die Stereo-Arbeitsposition ist dadurch ausgezeichnet, dass ein linker Abbildungskanal 952 und ein rechter Abbildungskanal 956 das jeweils aktive Objektiv symmetrisch durchsetzen. In der in den Figuren 14 und 15 gezeigten Anordnung befindet sich das Mikroskopobjektiv 210 in der Stereo-Arbeitsposition, das heißt das Mikroskopobjektiv 210 ist aktiv.

Die doc-Stellung ist **dadurch gekennzeichnet, dass** die Mittenachse des aktiven Mikroskopobjektivs in der doc-Stellung 250 mit der optischen Achse des rechten Kanals 956 fluchtet. Diese einkanalige Anordnung, die in den Figuren 16 und 17 gezeigt ist, wird für Dokumentationszwecke benutzt. Prinzipiell könnte hierfür auch der linke Kanal 952 bei einer entsprechend angepassten Konstruktion verwendet werden. Die doc-Stellung ist in den Figuren 16 und 17 dargestellt. Dort befindet sich das Mikroskopobjektiv 210 in der doc-Stellung, das heißt das Mikroskopobjektiv 210 ist auch hier aktiv. Auf dem Zoomkörper 922 befindet sich ein Tubus 950 mit einem Fotoausgang, wobei der Strahlengang des rechten Kanals 956 in der doc-Stellung auf die Kamera 930 am Fotoausgang des Tubus 950 umgelenkt wird.

Die Drehachse 504 des Objektivrevolvers 500 befindet sich in einem seitlichen Abstand 516 rechts neben der Mittenachse des aktiven Mikroskopobjektivs in der Stereo-Arbeitsposition. Dieser seitliche Abstand 516 entspricht 0,25 x der Basisweite 502 zwischen dem linken Abbildungskanal 952 und dem rechten Abbildungskanal 956. Dadurch ist gewährleistet, dass durch die Drehung des Revolvertellers 500 um die Drehachse 504 mit einem Drehwinkel 514 eine Verlagerung der Mittenachse des Objektivs von der Stereo-Arbeitsposition, für welche die Mittenachse 240 relevant ist, in die doc-Stellung, für welche die Mittenachse 250 relevant ist, um den Betrag 518 erfolgt. Mit dem Bezugszeichen 518 wird dabei der Abstand zwischen der Objektiv-Mittenachse des aktiven Objektivs in der Stereo-Arbeitsposition und dem rechten Kanal 956 bezeichnet.

Der normalerweise ortsfeste Teil der Übergabeschnittstelle 800 zur Energieversorgung, das heißt der versorgende Lichtleiter 944 mit der Endhülse 946, wird nun mit der Umschaltung zwischen den beiden möglichen Schaltstellungen eines Objektivs nachgeführt, so dass die Energieversorgung des aktiven Ringlichts in jeder der beiden Schaltstellungen möglich ist. Diese Nachführung erfolgt vorzugsweise mit Hilfe eines Motors und/oder kodiert. Beispielsweise können zur Kodierung an dem Revolverteller 500 kleine Magnete in definierten Abständen angeordnet sein, deren Position mit Hilfe von Hall-Sensoren an der Revolverbasis 700 abgefragt werden.

Eine kostengünstige Alternative ist das einfache Umstecken des versorgenden Lichtleiters 944 mit der Endhülse 946 in dafür vorgesehene Bohrungen an der Revolverbasis 700. Bei einer solchen Ausführungsvariante sind demgemäß zwei Übergabeschnittstellen vorhanden.

Außerdem ist eine Nachführung auch durch eine Drehbewegung des Revolvertellers 500 möglich. Mit Hilfe eines geeigneten mechanischen Elements, beispielsweise eines entsprechend geformten Hebels, der mit dem Revolverteller 500 zusammenwirkt, kann dabei ein automatisches Nachführen der Übergabeschnittstelle 800 bewerkstelligt werden. Beispielsweise kann eine umlaufende Bahnkurve vorhanden sein, die durch die Kurvenform sicherstellt, dass in allen doc-Stellungen die Übergabeschnittstelle zur Energieversorgung in die benötigte Position geschoben wird. Auf ein Nachführen kann im Übrigen verzichtet werden, wenn es für jede Schaltstellung eine ortsfeste Übergabeschnittstelle zur Energieversorgung gibt, so dass in jeder Schaltstellung eine Energieversorgung des aktiven Ringlichts möglich ist

Fig. 18 zeigt eine Unteransicht eines Revolvertellers 500 einer weiteren Ausführungsvariante eines erfindungsgemäßen Objektivwechslers für ein Stereomikroskop. Wiederum sind nur die Komponenten für die hier relevanten Objektivwechsel- und Ringlichtbeleuchtungsfunktionen dargestellt. Die Gehäuse der Ringlichter 410, 420, 430 sind mit einer hauptsächlich nach außen gerichteten Exzentrizität 444 auf den Objektiven angeordnet, so dass die Ringlichter 410, 420, 430 im Außenbereich breiter ausgeführt werden können. Dadurch steht mehr Bauraum für Leuchtdioden und/oder für andere in den Ringlichtern benötigte Elemente und Komponenten zur Verfügung.

Vorzugsweise ist der erfindungsgemäße Objektivwechsler 100 kodiert ausgeführt, so dass sich die Informationen zum Beleuchtungszustand und zur aktuellen Objektivschaltstellung speichern und bei Bedarf wieder reproduzieren lassen. Vorzugsweise werden die Einstellungen, die bei der letzten Benutzung des Ringlichts in einer bestimmten Schaltstellung aktiv waren, automatisch abgespeichert und beim nächsten Einschalten desselben Ringlichts in dieselbe Schaltstellung oder Arbeitsposition automatisch wieder reproduziert. Unter einer Kodierung des Objektivwechslers wird, wie vorstehend erläutert, eine Anordnung verstanden, bei welcher die Relativposition des beweglichen Trägers, beispielsweise also des Revolvertellers, zum feststehenden Träger automatisch bestimmt und ausgelesen werden kann.

Alternativ oder ergänzend können auch die Ringlichter kodiert werden. Durch eine zusätzliche Motorisierung des Objektivwechslers kann auch eine Fernsteuerung und in Kombination mit der Kodierung auch eine weitestgehende Automatisierung ermöglicht werden. In einer besonders fortgeschrittenen Ausbaustufe lässt sich die erfindungsgemäße Einrichtung auch an ein elektronisches Netzwerk anschließen. Der zum Betrieb von elektronisch ansteuerbaren Ringlichtern, beispielsweise der Leuchtdioden dieser Ringlichter, nötige Prozessor, der normalerweise in einer speziellen Ansteuereinheit angeordnet ist, lässt sich auch in den erfindungsgemäßen Objektivwechsler integrieren. Vorzugsweise werden sämtliche Funktionen des erfindungsgemäßen Objektivwechslers von diesem Prozessor gesteuert.

Durch die Kodierung ist es möglich, dass die Energie- beziehungsweise die Lichtversorgung beim Objektivwechsel nach dem Verlassen der Arbeitsstellung abgeschaltet wird und das Einschalten erst wieder in der Arbeitsstellung eines anderen Mikroskopobjektivs erfolgt. Dabei wird nur das jeweilige Ringlicht auf dem Mikroskopobjektiv in der Arbeitsstellung mit Energie und/oder mit Licht versorgt.

Die durch eine geeignete Einrichtung zur elektronischen Signalverarbeitung und Lichtdimmung bereitgestellte Beleuchtungsintensität kann nach Umschalten auf ein anderes Mikroskopobjektiv und/oder nach Ändern von anderen bekannten Abbildungsbedingungen, beispielsweise nach Umschalten eines Mikroskopobjektivs von der Schaltstellung für die Stereo-Arbeitsposition in die doc-Arbeitsposition, durch die Vorgabe einer vorab ermittelten Steuergröße zur Lampenansteuerung so eingestellt werden, dass eine Bildhelligkeit am Ort des Empfängers konstant bleibt. Als Empfänger kann das menschliche Auge ebenso angesehen werden, wie eine an das Mikroskop angeschlossene Kamera.

Aufgrund der unterschiedlichen Empfindlichkeiten ist der Zielwert für die konstant gehaltene Bildhelligkeit für die verschiedenen Empfänger, beispielsweise für das menschliche Auge oder eine Kamera, vorwählbar und eine optional mögliche Anpassung der Bildhelligkeit auf einen bestimmten Empfänger kann über eine kodierte Umschaltung zwischen verschiedenen Empfängern automatisch erfolgen. Hierfür kann besonders vorteilhaft die in den Figuren 11 und 12 gezeigte Anordnung verwendet werden. Durch die Lichtleitstäbe 380 und den Bogenansatz 340 am Ringlichtgehäuse 400 ergibt sich immer nur eine mögliche Arbeitsposition mit dem zugeordneten Abstand 404 des Ringlichtgehäuses 400 auf dem jeweiligen Objektiv. Demgemäß ist die Ausleuchtung sehr gut reproduzierbar. Die Lichtdimmung lässt sich über die Blende 610 in Verbindung mit dem Lichtleitstab 380, wie oben beschrieben, realisieren.

Die Übergabeschnittstelle liegt vorzugsweise im oberen Halbraum des Objektivrevolvers 500. Die Energieübertragung erfolgt demgemäß üblicherweise von oben oder geneigt. Prinzipiell ist auch eine waagerechte Energieübertragung möglich. Da sich eine senkrecht angeordnete Energieübertragung durch einen Lichtleiter technisch einfach realisieren lässt, ist diese Ausführungsform bevorzugt.

An der Übergabeschnittstelle kann ergänzend oder alternativ auch elektrische Energie übergeben werden, die erst im aktiven Beleuchtungsmittel, insbesondere im aktiven Ringlicht, in Licht umgewandelt wird. Dieses Verfahren kann zum Beispiel bei LED- und/oder OLED-Ringleuchten eingesetzt werden, wobei die Übergabeschnittstelle dann vorzugsweise aus der jeweils nötigen Anzahl von Schleifkontakten besteht.

Auch eine Kombination aus verschiedenartigen Ringlichtern mit verschiedenen Leuchtelementen und gegebenenfalls auch verschiedenen Arten der benötigten Energie, beispielsweise also Leuchtdioden und Lichtleitfasern, ist möglich. Die Übergabeschnittstelle ist dann für die Übertragung der jeweils benötigten Energiearten auszulegen.

Die mögliche Anordnung der Leuchtelemente am Ringlicht umfasst sämtliche bekannten Ringlicht-Beleuchtungsarten. Einschränkungen gegenüber handelsüblichen Ringlichtern bestehen insoweit nicht. Sie können rotationssymmetrisch oder nichtrotationssymmetrisch, einreihig oder mehrreihig, segmentiert oder nicht-segmentiert angeordnet sein. Einzelne oder segmentierte Leuchtelemente lassen sich gezielt ansteuern, so dass eine Selektion von bestimmten Beleuchtungswinkeln oder Beleuchtungsazimuten, möglich ist. Außerdem sind zeit- und/oder ereignisgesteuerte Beleuchtungsabläufe möglich. Beispielsweise kann die Beleuchtung azimutal rotieren, es kann eine stroboskopartige Beleuchtung gewählt werden oder es können einzelne Blitze ausgesandt werden. Faseroptische Ringlichte können als Spalt- oder Mehrpunkt-Ringlichter ausgeführt sein.

Ein Objektivwechsel kann auch über eine Linearbewegung eines Schlittens, auf dem mindestens zwei Objektive befestigt sind, erfolgen. Auch in diesem Fall können sich die jeweiligen Adapterstücke relativ zu den Objektiven, bezogen in diesem Fall auf eine lineare Verschiebung, für alle Objektive an derselben Position befinden. Die Ringlichtgehäuse 400 für Objektivwechsler mit zwei linear verschiebbaren Objektiven müssen bei möglichen Platzproblemen mindestens eine Abflachung, entsprechend der in Fig. 13 gezeigten Situation, besitzen. Sofern mehr als zwei linear verschiebbar Objektive an einem Schlitten angeordnet werden sollen, können auf jeweils gegenüberliegenden Seiten die entsprechenden Abflachungen vorgesehen sein.

Die durch unterschiedliche Objektivtypen eventuell vorhandenen Arbeitshöhendifferenzen zwischen den montierten Ringlichtern können auch durch besondere flexible Ringlichtzuleitungen ausgeglichen werden. In diesem Fall wird eine gegebenenfalls zu lange Ringlichtzuleitung durch ein überwiegend tangentiales Aufwickeln um das Objektiv verkürzt, so dass keine störenden Ringlichtzuleitungen die Funktion behindern können. Hierfür ist eine tangential aus dem Ringlichtgehäuse 400 austretende Ringlichtzuleitung vorteilhaft.

Die Ringlichter, die an den Objektiven des als Revolver ausgeführten Objektivwechslers befestigt sind, können ergänzend auch wie normale Standard-Ringlichter über externe Kaltlichtquellen und/oder elektronische Ansteuerungen versorgt werden. Vorteilhaft ist dann eine Drehwinkelbegrenzung des Revolvers vorhanden, der das Aufwickeln der Ringlichtkabel verhindert.

Ergänzend können darüber hinaus die Ringlichter auch mit einem eigenen Energiespeicher versehen sein, so dass sie für eine gewisse Zeit selbst leuchten können. Bevorzugt ist der Energiespeicher relativ zu dem jeweiligen Beleuchtungsmittel ortsfest angeordnet.

Mit der vorliegenden Erfindung wird ein neuer Objektivwechsler mit Auflichtbeleuchtung für Lichtmikroskope bereitgestellt, dessen Kernidee eine Übergabeschnittstelle, insbesondere für Ringlichter an einem Objektivrevolver, beinhaltet. Hierbei kann ein feststehender Lichtleiter für die Energieversorgung vorhanden sein und jedes Beleuchtungsmittel, beispielsweise jedes adaptierte Ringlicht, kann eine mitdrehende Zuleitung aufweisen. Durch eine Vergrößerung des Bahndurchmessers für die Objektive kann dabei der notwendige Platz für die Adaption von mehreren Ringlichtern geschaffen werden. Durch die erfindungsgemäße Anordnung kann beispielsweise gewährleistet werden, dass immer nur die Ringlichtbeleuchtung des jeweils aktiven Mikroskopobjektivs mit Licht oder mit elektrischer Energie versorgt wird und dass gleichwohl eine einfache Handhabung des Objektivrevolvers erhalten bleibt.

Im Stand der Technik war der Einsatz von Ringleuchten am Objektivwechsler nur mit starken Einschränkungen möglich. Nachteilig war insbesondere der verringerte Arbeitsabstand. Aufgrund der beschränkten Platzverhältnisse konnten Ringlichter nicht an allen Objektiven eingesetzt werden. Weiterhin wickelt sich das Versorgungskabel bei bekannten Lösungen beim Drehen des Objektivrevolvers auf und die Objektivwechsler sind mit Ringlichtern demgemäß nicht frei durchdrehbar. Sämtliche dieser Nachteile werden bei der vorliegenden Erfindung vermieden.

## Patentansprüche

1. Objektivwechsler mit Auflichtbeleuchtung für Lichtmikroskope,
mit mindestens zwei Mikroskopobjektiven (210, 220, 230) zum Untersuchen einer Probe,
mit einem ortsfesten Träger (700), der zur Montage an einem Basiskörper (914) des Mikroskops (900) eingerichtet ist und an dem mindestens eine Übergabeschnittstelle (800) zum Übertragen von Licht zum Beleuchten der Probe vorhanden ist,
mit einem drehbaren Revolverteller (500), an welchem die Mikroskopobjektive (210, 220, 230) montiert sind und der zum definierten Positionieren relativ zu dem ortsfesten Träger (700) eingerichtet ist,
wobei jedem Mikroskopobjektiv (210, 220, 230) mindestens ein separates Beleuchtungsmittel (410, 420, 430) zum Beleuchten der Probe und mindestens ein separater Lichtanschluss (310, 320, 330) zugeordnet sind, der mit dem jeweiligen Beleuchtungsmittel (410, 420, 430) verbunden ist,
wobei durch Positionieren des drehbaren Revolvertellers (500) relativ zu dem ortsfesten Träger (700) ein Leitungseingriff zwischen der Übergabeschnittstelle (800) und dem Lichtanschluss (310, 320, 330) bereitstellbar ist, welcher dem jeweils aktiven Mikroskopobjektiv (210, 220, 230) zugeordnet ist,
**dadurch gekennzeichnet,**
**dass** zwischen den Lichtanschlüssen (310, 320, 330) und den Beleuchtungsmittel (410, 420, 430) als Lichtleitmittel jeweils Lichtleitstäbe und/oder innen verspiegelte Röhrchen vorhanden sind und
**dass** die Lichtanschlüsse durch obere Enden der Lichtleitstäbe und/oder der innen verspiegelten Röhrchen (310, 320, 330) gebildet sind, welche in den drehbaren Revolverteller eingeschoben sind.

2. Objektivwechsler nach Anspruch 1,
**dadurch gekennzeichnet,**
**dass** zwischen einem Lichtanschluss (310, 320, 330) und einem Beleuchtungsmittel (410, 420, 430) ein- oder mehrarmige Schwanenhälse und/oder ein- oder mehrarmige flexible Lichtleiter als Lichtleitmittel vorhanden sind.

3. Objektivwechsler nach Anspruch 1 oder 2,
**dadurch gekennzeichnet,**
**dass** ein Beleuchtungsmittel eine Mehrzahl von Leuchtelementen aufweist.

4. Objektivwechsler nach einem der Ansprüche 1 bis 3,
**dadurch gekennzeichnet,**
**dass** mindestens eines der Beleuchtungsmittel mit einer Kombination aus verschiedenen Leuchtelementen bestückt ist.

5. Objektivwechsler nach einem der Ansprüche 1 bis 4,
**dadurch gekennzeichnet,**
**dass** als Beleuchtungsmittel faseroptische Auflichtbeleuchtungen vorhanden sind.

6. Objektivwechsler nach einem der Ansprüche 1 bis 5,
**dadurch gekennzeichnet,**
**dass** zur Energieversorgung bis zu der Übergabeschnittstelle (800) ein faseroptischer Standardlichtleiter (944) vorhanden ist.

7. Objektivwechsler nach einem der Ansprüche 1 bis 6,
**dadurch gekennzeichnet,**
**dass** die Übergabeschnittstelle (800) zum Übertragen von Licht und/oder von elektrischer Energie eingerichtet ist.

8. Mikroskop mit einem Objektivwechsler nach einem der Ansprüche 1 bis 7.

## Claims

1. Objective changer with incident light illumination for light microscopes, comprising
- at least two microscope objectives (210, 220, 230) for investigation of a specimen,
- an immovable carrier (700) adapted for being mounted on a base body (914) of said microscope (900) and on which carrier at least one transfer interface (800) is provided for transferring light for illuminating said specimen,
- a rotatable revolver plate (500), on which said microscope objectives (210, 220, 230) are mounted, said rotatable revolver plate (500) being adapted for a defined positioning in relation to said immovable carrier (700),
wherein each microscope objective (210, 220, 230) is associated with at least one separate illuminating means (410, 420, 430) for illuminating the specimen and with at least one separate light connector (310, 320, 330) which is connected to the respective illuminating means (410, 420, 430),
wherein by positioning said rotatable revolver plate (500) relative to the immovable carrier (700), a line engagement can be established between said transfer interface (800) and that light connector (310, 320, 330) which is associated to the currently active microscope objective (210, 220, 230),
**characterized in that**
light guidance bars and/or internally mirrored tubes are provided as light guiding means between each of the light connectors (310, 320, 330) and the illuminating means (410, 420, 430) and
the light connectors are formed by upper ends of the light guidance bars and/or of the internally mirrored tubes (310, 320, 330) which are inserted into the rotatable revolver plate.

2. Objective changer according to claim 1,
**characterized in that**
single-arm or multi-arm goosenecks and/or single-arm or multi-arm flexible optical waveguides are provided as light guiding means between a light connector (310, 320, 330) and an illuminating means (410, 420, 430).

3. Objective changer according to claim 1 or 2,
**characterized in that**
an illuminating means has a plurality of light emitting elements.

4. Objective changer according to any one of the claims 1 to 3,
**characterized in that**
at least one of said illuminating means is equipped with a combination of different light emitting elements.

5. Objective changer according to any one of the claims 1 to 4,
**characterized in that**
said illuminating means are formed by fiber-optic incident-light illuminating means.

6. Objective changer according to any one of the claims 1 to 5,
**characterized in that**
for the energy supply up to said transfer interface (800) a standard fiber-optic light guide (944) is provided.

7. Objective changer according to any one of the claims 1 to 6,
**characterized in that**
said transfer interface (800) is adapted for the transfer of light and/or of electrical energy.

8. Microscope equipped with an objective changer according to any one of claims 1 to 7.

## Revendications

1. Changeur d'objectif avec éclairage par lumière incidente pour microscope optique, avec au moins deux objectifs (210, 220, 230) de microscope pour étudier un échantillon,
avec un support stationnaire (700) qui est agencé pour se monter sur un corps de base (914) du microscope (900) et sur lequel se trouve au moins une interface (800) de transfert pour transférer de la lumière afin d'éclairer l'échantillon,
avec un plateau révolver tournant (500) sur lequel sont montés les objectifs (210, 220, 230) de microscope et qui est agencé pour un positionnement défini par rapport au support stationnaire (700),
dans lequel à chaque objectif (210, 220, 230) de microscope sont associés au moins un moyen d'éclairage séparé (410, 420, 430) pour éclairer l'échantillon et au moins un raccordement optique séparé (310, 320, 330), qui est relié au moyen d'éclairage (410, 420, 430) respectif,
dans lequel, par positionnement du plateau révolver tournant (500) par rapport au support stationnaire (700), une prise de conduction entre l'interface de transfert (800) et le raccordement optique (310, 320, 330) peut être établie, laquelle est associée à l'objectif de microscope actif respectif (210, 220, 230),
***caractérisé***
***en ce que****,* entre les raccordements optiques (310, 320, 330) et les moyens d'éclairage (410, 420, 430), se trouvent, en tant que conducteurs optiques, des barres conductrices optiques et/ou des petits tubes à l'intérieur réfléchissant, et *en ce que les* raccordements optiques sont formés par des extrémités supérieures des barres conductrices optiques et/ou des petits tubes à l'intérieur réfléchissant (310, 320, 330), qui sont enfoncés dans le plateau révolver tournant.

2. Changeur d'objectif selon la revendication 1,
***caractérisé***
***en ce qu***'entre un raccordement optique (310, 320, 330) et un moyen d'éclairage (410, 420, 430) se trouvent des cols de cygne à un ou plusieurs bras et/ou des conducteurs optiques flexibles à un ou plusieurs bras servant de moyens d'éclairage.

3. Changeur d'objectif selon la revendication 1 ou 2,
***caractérisé***
***en ce qu***'un moyen d'éclairage comprend une pluralité d'éléments lumineux.

4. Changeur d'objectif selon l'une quelconque des revendications 1 à 3,
***caractérisé***
***en ce qu***'au moins l'un des moyens d'éclairage est équipé d'une combinaison de différents éléments d'éclairage.

5. Changeur d'objectif selon l'une quelconque des revendications 1 à 4,
***caractérisé***
***en ce que*** des éclairages en lumière incidente par fibres optiques sont présents comme moyens d'éclairage.

6. Changeur d'objectif selon l'une quelconque des revendications 1 à 5,
***caractérisé***
***en ce que****,* pour l'alimentation en énergie jusqu'à l'interface de transfert (800), il est prévu un conducteur standard à fibre optique (944).

7. Changeur d'objectif selon l'une quelconque des revendications 1 à 6,
***caractérisé***
***en ce que*** l'interface (800) de transfert est agencée pour transmettre de la lumière et/ou de l'énergie électrique.

8. Microscope avec un changeur d'objectif selon l'une quelconque des revendications 1 à 7.
